(19) Europäisches Patentamt / European Patent Office / Office européen des brevets

(11) **EP 3 190 291 A1**

(12) **DEMANDE DE BREVET EUROPEEN**

(43) Date de publication:
**12.07.2017 Bulletin 2017/28**

(51) Int Cl.:
*F03D 9/00* (2016.01)   *H02N 1/00* (2006.01)

(21) Numéro de dépôt: **16207637.6**

(22) Date de dépôt: **30.12.2016**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **06.01.2016 FR 1650075**

(71) Demandeurs:
• **Commissariat à l'Energie Atomique et aux Energies Alternatives**
**75015 Paris (FR)**

• **Université Grenoble Alpes**
**38401 Saint-Martin-d'Hères (FR)**

(72) Inventeurs:
• **Perez, Matthias**
**38000 Grenoble (FR)**
• **Boisseau, Sébastien**
**38130 Echirolles (FR)**
• **Reboud, Jean-Luc**
**38100 Grenoble (FR)**

(74) Mandataire: **Talbot, Alexandre**
**Cabinet Hecké**
**Europole, BP 1537**
**10, rue d'Arménie**
**38025 Grenoble Cedex 1 (FR)**

(54) **CONVERTISSEUR ELECTROSTATIQUE**

(57)   Ce convertisseur électrostatique comporte un rotor comprenant au moins une pale (1) destinée à recevoir un flux d'air ; un stator (2) comprenant au moins une électrode (E) ; une membrane flexible (3) montée sur la pale (1), et comprenant une contre-électrode, l'électrode ou la contre-électrode étant revêtue d'un matériau diélectrique adapté pour être polarisé ; la membrane flexible (3) décrivant une trajectoire lors d'un tour de rotor ; la membrane flexible (3) étant configurée pour venir en contact glissant avec le stator (2) sur une première partie de la trajectoire, et configurée pour être à distance du stator (2) sur une seconde partie de la trajectoire de manière à former une capacité électrique variable adaptée pour induire un courant électrique.

Fig. 1

Printed by Jouve, 75001 PARIS (FR)

## Description

### Domaine technique

La présente invention a trait à un convertisseur électrostatique, de type turbine. A titre d'exemples, des applications en fonctionnement hybride récupérateur d'énergie/débitmètre sont envisagées notamment dans les domaines de l'automobile, l'aéronautique et l'habitat.

### Etat de la technique antérieure

Un convertisseur électrostatique connu de l'état de la technique, notamment du document DE 20 2012 009 612, comporte :

- un rotor comprenant au moins une pale destinée à recevoir un flux d'air ;
- un stator comprenant au moins une électrode.

Une extrémité de la pale comporte une contre-électrode revêtue d'un matériau diélectrique adapté pour être polarisé. Un tel convertisseur électrostatique est de type turbine à vent, et forme un récupérateur d'énergie. La puissance cinétique du flux d'air est convertie en électricité. Tout d'abord, la turbine convertit le flux d'air en un mouvement de rotation relatif entre le stator et le rotor. Puis le mouvement de rotation relatif induit des variations de capacité électrique entre la ou les électrodes du stator et la contre-électrode de la ou chaque pale.

L'espacement entre une électrode du stator et une contre-électrode du rotor est un paramètre critique du convertisseur électrostatique dans la mesure où il intervient sur la variation de capacité électrique et sur la puissance de conversion. Plus cet espacement est réduit, plus il est possible d'extraire de l'énergie électrique.

Un tel convertisseur électrostatique de l'état de la technique n'est pas entièrement satisfaisant dans la mesure où le contrôle géométrique industriel de cet espacement est complexe, tout particulièrement lorsque l'espacement est inférieur à 500 µm, et ce en raison du mouvement de rotation relatif entre le stator et le rotor. Des chocs entre le rotor et le stator sont alors susceptibles d'apparaître et d'occasionner des pertes énergétiques importantes, voire un arrêt de la turbine. Un contrôle géométrique industriel parfaitement maîtrisé de cet espacement nécessiterait des coûts de fabrication prohibitifs (micro-fabrications, roulements à bille sans roulis etc.).

### Exposé de l'invention

Ainsi, la présente invention vise à remédier en tout ou partie aux inconvénients précités, et concerne à cet effet un convertisseur électrostatique comportant :

- un rotor comprenant au moins une pale destinée à recevoir un flux d'air ;

- un stator comprenant au moins une électrode revêtue d'un matériau diélectrique adapté pour être polarisé ;
- une membrane flexible montée sur la pale, et comprenant une contre-électrode ; la membrane flexible décrivant une trajectoire lors d'un tour de rotor ; la membrane flexible étant configurée de sorte que la contre-électrode vient en contact glissant avec le matériau diélectrique sur une première partie de la trajectoire, et de sorte que la contre-électrode est située à distance du matériau diélectrique sur une seconde partie de la trajectoire de manière à obtenir une capacité électrique variable adaptée pour induire un courant électrique.

Ainsi, un tel convertisseur électrostatique selon l'invention permet de s'affranchir d'un contrôle géométrique industriel de l'espacement entre une électrode du stator et une contre-électrode du rotor grâce à une telle membrane flexible. La membrane flexible permet l'obtention de fortes variations de capacités électriques pour un frottement très faible relativement à un choc entre le rotor et le stator de l'état de la technique. Les risques de choc entre la pale et le stator sont supprimés, y compris en cas d'écoulement turbulent, car la membrane flexible est interposée entre la pale et le stator, formant un séparateur. Par ailleurs, la fabrication d'un tel convertisseur électrostatique est simple et peu coûteuse.

Par « contact glissant », on entend que la contre-électrode de la membrane flexible se déplace parallèlement à la surface de contact avec le matériau diélectrique (sur l'électrode du stator) sur la première partie de la trajectoire.

L'invention concerne également un convertisseur électrostatique comportant :

- un rotor comprenant au moins une pale destinée à recevoir un flux d'air ;
- un stator comprenant au moins une électrode ;
- une membrane flexible montée sur la pale, et comprenant une contre-électrode revêtue d'un matériau diélectrique adapté pour être polarisé ; la membrane flexible décrivant une trajectoire lors d'un tour de rotor; la membrane flexible étant configurée de sorte que le matériau diélectrique vient en contact glissant avec l'électrode sur une première partie de la trajectoire, et de sorte que le matériau diélectrique est situé à distance de l'électrode sur une seconde partie de la trajectoire de manière à obtenir une capacité électrique variable adaptée pour induire un courant électrique.

Ainsi, un tel convertisseur électrostatique selon l'invention permet de s'affranchir d'un contrôle géométrique industriel de l'espacement entre une électrode du stator et une contre-électrode du rotor grâce à une telle membrane flexible. La membrane flexible permet l'obtention de fortes variations de capacités électriques pour un frottement très faible relativement à un choc entre le rotor et le stator de l'état de la technique. Les risques de choc entre la pale et le stator sont supprimés, y compris en cas d'écoulement turbulent, car la membrane flexible est interposée entre la pale et le stator, formant un séparateur. Par ailleurs, la fabrication d'un tel convertisseur électrostatique est simple et peu coûteuse.

Par « contact glissant », on entend que le matériau diélectrique (sur la contre-électrode) se déplace parallèlement à la surface de contact avec l'électrode du stator sur la première partie de la trajectoire.

Le concept inventif commun entre les deux convertisseurs électrostatiques selon l'invention est le contact glissant entre la membrane flexible et le stator, ce qui permet de réduire les pertes énergétiques relativement à des chocs intermittents.

Avantageusement, la membrane flexible est au moins partiellement ferromagnétique, et le stator comporte des moyens d'aimantation agencés pour maintenir la membrane flexible en contact glissant avec le stator sur la première partie de la trajectoire.

Ainsi, de tels moyens d'aimantation permettent de s'affranchir d'un problème d'oscillations (« *fluttering* » en langue anglaise) de la membrane flexible qui sont susceptibles d'apparaître lorsque la raideur de la membrane est trop faible ou lorsque la vitesse de rotation du rotor est trop élevée. Ces oscillations peuvent supprimer le contact entre la membrane flexible et le stator sur la première partie de la trajectoire.

Selon une variante, le convertisseur électrostatique comporte des moyens de lestage agencés pour maintenir la membrane flexible en contact glissant avec le stator sur la première partie de la trajectoire.

Ainsi, de tels moyens de lestage permettent de s'affranchir d'un problème d'oscillations (« *fluttering* » en langue anglaise) de la membrane flexible qui sont susceptibles d'apparaître notamment lorsque la raideur de la membrane est trop faible ou lorsque la vitesse de rotation du rotor est trop élevée. Ces oscillations peuvent supprimer le contact entre la membrane flexible et le stator sur la première partie de la trajectoire.

Avantageusement, la membrane flexible présente une raideur en flexion comprise entre 1 mN/m et 10 N/m.

Ainsi, une telle raideur en flexion est suffisamment forte pour empêcher l'apparition d'oscillations, et suffisamment faible pour éviter l'obtention de frottements importants avec le stator. La raideur en flexion est préférentiellement de l'ordre de 1 N/m.

Avantageusement, l'électrode présente une longueur, notée $L_0$, et la membrane flexible présente une longueur, notée L, vérifiant $L_0 \le L \le 5\,L_0$.

Ainsi, une telle longueur L de membrane permet de recouvrir entièrement l'électrode.

Selon un mode de réalisation, le matériau diélectrique est un électret.

Ainsi, un tel matériau diélectrique possède un état de polarisation quasi-permanent, et permet de s'affranchir d'une alimentation électrique dédiée à la polarisation.

Selon une forme d'exécution, l'électret est sélectionné dans le groupe comportant un polytétrafluoroéthylène (PTFE) tel que le Téflon®, un copolymère de tétrafluoroéthylène et d'hexafluoropropylène (FEP), un empilement $SiO_2$-$Si_3N_4$, un polymère perfluoré amorphe tel que le Cytop®.

Avantageusement, la membrane flexible et le stator sont adaptés pour échanger des charges électrostatiques par effet triboélectrique sur la première partie de la trajectoire via le matériau diélectrique.

Ainsi, le matériau diélectrique peut être polarisé s'il n'est pas un électret, ou peut être rechargé s'il est un électret.

S'il n'est pas un électret, le matériau diélectrique est avantageusement sélectionné dans le groupe comportant le polyfluorure de vinylidène (PVDF), un polyimide tel que le Kapton®, le polyméthacrylate de méthyle (PMMA), le nylon.

Avantageusement, le rotor présente un axe de rotation, la pale présente une extrémité distale relativement à l'axe de rotation, et la membrane flexible est montée à l'extrémité distale de la pale.

Avantageusement, le stator comporte un ensemble d'électrodes réparti, de préférence uniformément, autour de la trajectoire.

Ainsi, le stator forme tout ou partie d'un carter permettant de protéger la ou les pales du rotor. La trajectoire de la membrane flexible étant essentiellement circulaire, le stator présente avantageusement la forme d'un cylindre, d'un disque ou d'une sphère.

Avantageusement, l'ensemble d'électrodes comporte $N_e$ électrodes successives réparties autour de la trajectoire, $N_e$ étant un entier naturel supérieur ou égal à 3 ; et la contre-électrode de la membrane flexible forme un réseau de motifs agencé de sorte que, sur la première partie de la trajectoire, deux motifs consécutifs sont :

- en contact avec une k-ième électrode et une (k+2)-ième électrode, et
- à distance d'une (k+1)-ième électrode, avec $k \in [[1, N_e]]$.

Ainsi, un tel réseau de motifs forme une texturation de la contre-électrode et de la membrane flexible. Une telle contre-électrode texturée permet :

- d'augmenter la fréquence de variation de la capacité électrique sans augmenter le nombre de membranes flexibles,
- de simplifier la conception de la membrane flexible, par exemple pour éviter un recouvrement simultané de deux électrodes adjacentes par la membrane flexible.

Avantageusement, le rotor comporte $N_p$ pales, $N_p$ étant un entier supérieur ou égal à 1, la membrane flexible étant montée sur chaque pale, et le stator comporte un ensemble de $N_e$ électrodes, $N_e$ étant un entier vérifiant $N_e=2N_p$.

Ainsi, une telle répartition est optimisée afin d'avoir un rapport $N_e \times (C_{max}-C_{min})$ maximum, où $C_{max}$ et $C_{min}$ sont respectivement la capacité électrique maximale et minimale obtenues lors d'un tour de rotor.

Avantageusement, la membrane flexible comporte un film d'un matériau présentant un module d'Young compris entre 100 MPa et 5 GPa, de préférence compris entre 1 GPa et 5 GPa.

Avantageusement, le film présente une épaisseur comprise entre 1 $\mu$m et 1 mm, de préférence comprise entre 1 $\mu$m et 125 $\mu$m, plus préférentiellement comprise entre 1 $\mu$m et 50 $\mu$m.

Avantageusement, le matériau diélectrique présente une épaisseur comprise entre 1 $\mu$m et 125 $\mu$m, de préférence comprise entre 25 $\mu$m et 100 $\mu$m.

Avantageusement, le stator comporte un circuit électrique dans lequel circule le courant induit, le circuit électrique étant connecté à ladite au moins une électrode.

Ainsi, le fait de connecter le circuit électrique uniquement aux électrodes du stator (« *Slot-effect connection* » en langue anglaise), et non à la fois aux électrodes du stator et aux contre-électrodes du rotor (« *Cross-wafer connection* » en langue anglaise), est plus aisé à mettre en oeuvre.

## Brève description des dessins

D'autres caractéristiques et avantages apparaîtront dans la description qui va suivre de différents modes de réalisation de l'invention, donnés à titre d'exemples non limitatifs, en référence aux dessins annexés dans lesquels :

- la figure 1 est une vue schématique en perspective d'un convertisseur électrostatique selon un mode de réalisation de l'invention,
- les figures 2a à 2e sont des vues schématiques partielles de côté illustrant différentes positions de la membrane flexible,
- la figure 3 est une vue schématique partielle, en coupe, d'un convertisseur électrostatique selon un mode de réalisation de l'invention,
- la figure 4 est une vue schématique partielle, en coupe, d'un convertisseur électrostatique selon un mode de réalisation de l'invention,
- les figures 5 à 7 sont des vues schématiques en perspective d'un convertisseur électrostatique selon différents modes de réalisation de l'invention,
- la figure 8 est une vue schématique partielle, de côté, d'un convertisseur électrostatique selon un mode de réalisation de l'invention.

## Exposé détaillé des modes de réalisation

Pour les différents modes de réalisation, les mêmes références seront utilisées pour des éléments identiques ou assurant la même fonction, par souci de simplification de la description. Les caractéristiques techniques décrites ci-après pour différents modes de réalisation sont à considérer isolément ou selon toute combinaison techniquement possible.

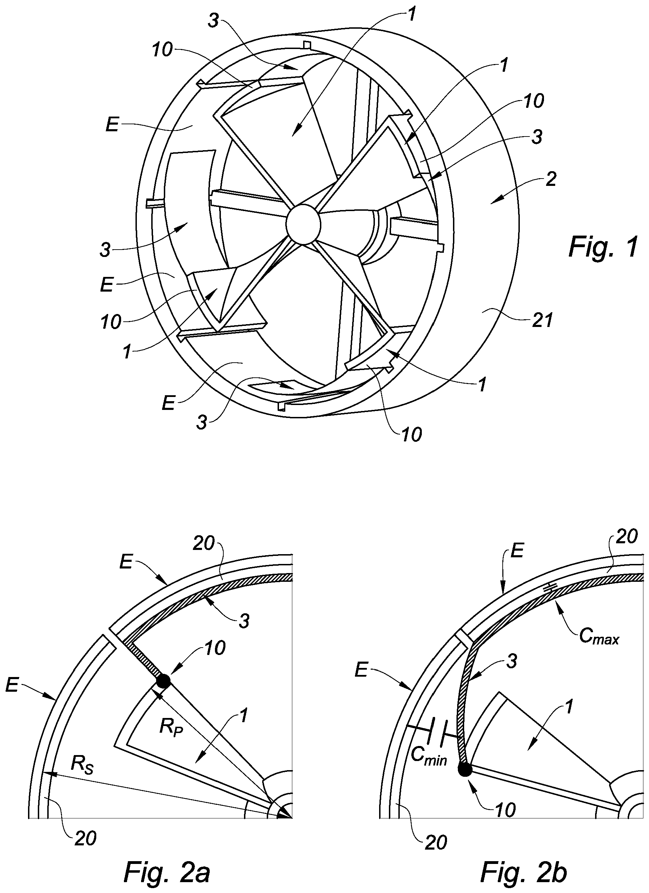

Le convertisseur électrostatique illustré à la figure 1 est un convertisseur électrostatique comportant :

- un rotor comprenant au moins une pale 1 destinée à recevoir un flux d'air ;
- un stator 2 comprenant au moins une électrode E ;
- une membrane flexible 3 montée sur la pale 1, et comprenant une contre-électrode ; la membrane flexible 3 décrivant une trajectoire lors d'un tour de rotor.

Selon un premier mode de réalisation, l'électrode E est revêtue d'un matériau diélectrique 20 adapté pour être polarisé. La membrane flexible 3 est configurée de sorte que la contre-électrode vient en contact glissant avec le matériau diélectrique 20 sur une première partie de la trajectoire, et de sorte que la contre-électrode est située à distance du matériau diélectrique 20 sur une seconde partie de la trajectoire de manière à obtenir une capacité électrique variable adaptée pour induire un courant électrique.

Selon un second mode de réalisation, la contre-électrode est revêtue d'un matériau diélectrique 20 adapté pour être polarisé. La membrane flexible 3 est configurée de sorte que le matériau diélectrique 20 vient en contact glissant avec l'électrode E sur une première partie de la trajectoire, et de sorte que le matériau diélectrique 20 est situé à distance de l'électrode E sur une seconde partie de la trajectoire de manière à obtenir une capacité électrique variable adaptée pour induire un courant électrique.

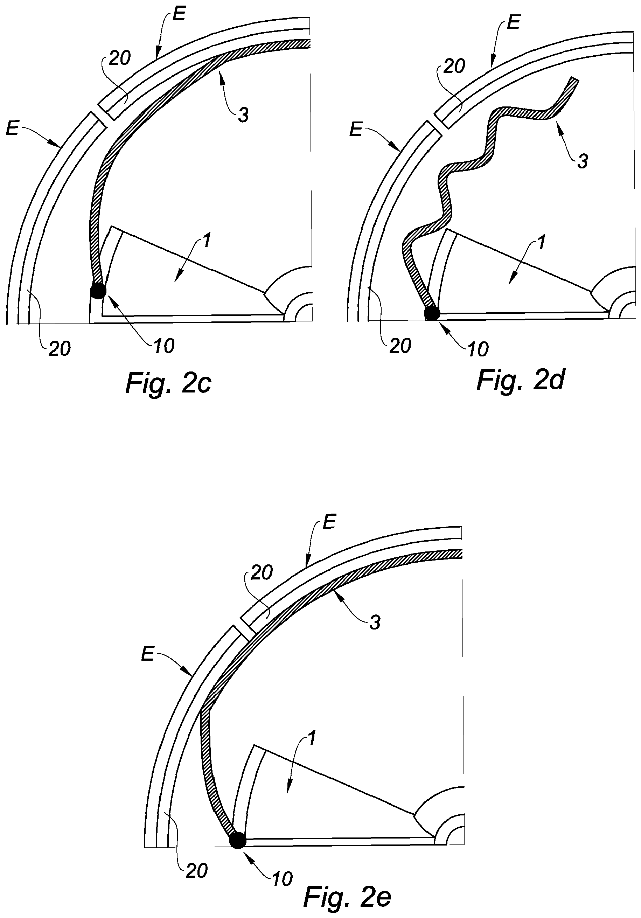

Plus précisément, le rotor illustré à la figure 1 comprend quatre pales 1. Le rotor présente un axe de rotation, de préférence horizontal et parallèle au flux d'air. Chaque pale 1 présente une extrémité distale 10 relativement à l'axe de rotation, et la membrane flexible 3 est montée à l'extrémité distale de chaque pale 1. L'extrémité distale 10 est située à une distance $R_p$ du centre de rotation du rotor (visible à la figure 2). Le flux d'air présente avantageusement une vitesse supérieure ou égale à 2 m/s.

Plus précisément, le stator 2 illustré à la figure 1 comporte un ensemble de $N_e$ électrodes E, $N_e$ étant un entier vérifiant $N_e=2 \times N_p$, où $N_p$ est le nombre de pales, soit $N_e=8$. Une telle répartition est optimisée afin d'avoir un rapport $N_e \times (C_{max}-C_{min})$ maximum, où $C_{max}$ et $C_{min}$ sont respectivement la capacité électrique maximale et minimale obtenues lors d'un tour de rotor, comme illustré à la figure 2b. L'ensemble de $N_e$ électrodes E est

réparti uniformément autour de la trajectoire de la membrane flexible 3, la trajectoire étant circulaire et déterminée par le rotor. Dans le premier mode de réalisation, les $N_e$ électrodes E sont revêtues du matériau diélectrique 20. Chaque électrode E présente avantageusement la même longueur, notée $L_o$ au sens de longueur d'arc et d'abscisse curviligne. La première partie de la trajectoire, formant un arc de cercle, de la membrane flexible 3 correspond à la surface de contact, incurvée, entre la membrane flexible 3 et l'électrode E correspondante. Le stator 2 forme un carter 21 cylindrique adapté pour protéger les pales 1 du rotor. Les électrodes E du stator 2 sont situées à une distance $R_s$ du centre de rotation du rotor (visible à la figure 2). L'espacement entre une électrode E du stator 2 et une contre-électrode du rotor correspond à la différence entre $R_s$ et $R_p$, soit $R_s - R_p$. Le stator 2 comporte avantageusement un circuit électrique (non illustré) dans lequel circule le courant induit, le circuit électrique étant connecté à chaque électrode E.

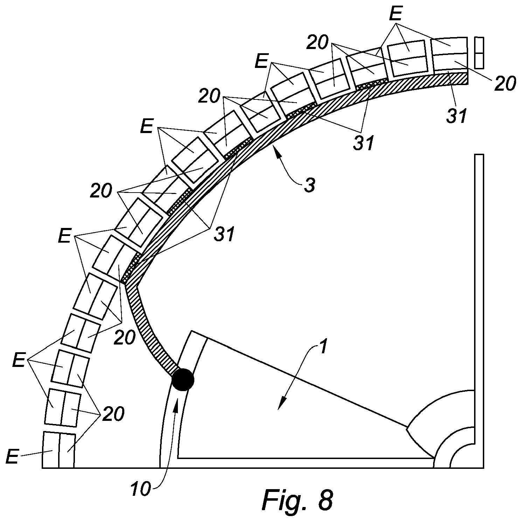

Selon un mode de réalisation illustré à la figure 8, l'ensemble d'électrodes E comporte $N_e$ électrodes E successives réparties autour de la trajectoire de la membrane flexible 3, $N_e$ étant un entier naturel supérieur ou égal à 3. La contre-électrode de la membrane flexible 3 forme un réseau de motifs 31 agencé de sorte que, sur la première partie de la trajectoire de la membrane flexible 3, deux motifs 31 consécutifs sont :

- en contact avec une k-ième électrode E et une (k+2)-ième électrode E, et
- à distance d'une (k+1)-ième électrode E, avec $k \in [[1, Ne]]$.

Dans le premier mode de réalisation, les $N_e$ électrodes E sont revêtues du matériau diélectrique 20, comme illustré à la figure 8. Dans le second mode de réalisation, les motifs 31 du réseau sont revêtus du matériau diélectrique 20. Si les $N_e$ électrodes E successives sont réparties autour de la trajectoire de la membrane flexible 3 suivant une période p, alors le réseau de motifs 31 présente avantageusement une période p/2. Le réseau de motifs 31 est avantageusement réalisé dans un matériau métallique, formant une texturation métallique de la contre-électrode.

Le matériau diélectrique 20 est avantageusement un électret. L'électret est avantageusement sélectionné dans le groupe comportant un polytétrafluoroéthylène (PTFE) tel que le Téflon®, un copolymère de tétrafluoroéthylène et d'hexafluoropropylène (FEP), un empilement $SiO_2$-$Si_3N_4$, un polymère perfluoré amorphe tel que le Cytop®. La tension de polarisation aux bornes de l'électret est telle que la puissance du convertisseur électrostatique est de l'ordre du $\mu W/cm^2$. A titre d'exemple, le champ électrique de claquage d'un PTFE est de l'ordre de 60 kV/cm et le champ électrique de polarisation est de l'ordre de 20 V/$\mu$m.

La membrane flexible 3 et le stator 2 sont avantageusement adaptés pour échanger des charges électrostatiques par effet triboélectrique sur la première partie de la trajectoire via le matériau diélectrique 20. Lorsque le matériau diélectrique 20 n'est pas un électret, la tension de polarisation aux bornes du matériau diélectrique 20 est telle que la puissance du convertisseur électrostatique est de l'ordre du $nW/cm^2$. Le matériau diélectrique 20 est alors avantageusement sélectionné dans le groupe comportant le polyfluorure de vinylidène (PVDF), un polyimide tel que le Kapton®, le polyméthacrylate de méthyle (PMMA), le nylon. Le matériau diélectrique 20 présente avantageusement une épaisseur comprise entre 1 $\mu$m et 125 $\mu$m, de préférence comprise entre 25 $\mu$m et 100 $\mu$m.

La membrane flexible 3 présente avantageusement une raideur en flexion comprise entre 1 mN/m et 10 N/m. La membrane flexible 3 peut être simulée comme une poutre encastrée-libre. La raideur en flexion s'exprime alors selon la formule $k = \dfrac{3EI}{L^3} = \dfrac{EHe_f^3}{4L^3}$, I étant le moment quadratique, L étant la longueur de la poutre comprise entre 1 mm et 10 cm, E étant le module d'élasticité de la poutre compris entre 100 MPa et 5 GPa, $e_f$ étant l'épaisseur de la poutre comprise entre 1 $\mu$m et 1 mm, H étant la largeur de la poutre comprise entre 1 mm et 10 cm. La membrane flexible 3 est avantageusement une lame flexible. Par « lame », on entend une bande mince, de forme allongée. La membrane flexible 3 présente avantageusement une longueur, notée L, vérifiant $L_0 \leq L \leq 5 \, L_0$. La membrane flexible 3 comporte avantageusement un film d'un matériau présentant un module d'Young compris entre 100 MPa et 5 GPa, de préférence compris entre 1 GPa et 5 GPa. Le film présente avantageusement une épaisseur comprise entre 1 $\mu$m et 1 mm, de préférence comprise entre 1 $\mu$m et 125 $\mu$m, plus préférentiellement comprise entre 1 $\mu$m et 50 $\mu$m. La membrane flexible 3 comporte avantageusement une partie électriquement conductrice, de préférence métallique, formant la contre-électrode. Dans le premier mode de réalisation, la contre-électrode vient en contact glissant avec le matériau diélectrique 20 sur la première partie de la trajectoire. La partie électriquement conductrice est d'un matériau préférentiellement sélectionné dans le groupe comportant le cuivre, l'or, l'argent, l'aluminium, le fer, le platine, le graphite. La membrane flexible 3 présente une première surface qui vient en contact glissant avec le matériau diélectrique 20 sur la première partie de la trajectoire pour le premier mode de réalisation, et une seconde surface opposée à la première surface.

La membrane flexible 3 est soumise aux forces suivantes qui déterminent sa position :

- la force électrostatique, fixée par la tension de polarisation aux bornes du matériau diélectrique 20, qui tend à attirer la membrane flexible 3 au stator 2 ;
- la force centrifuge, proportionnelle à la vitesse de rotation du rotor, qui tend également à attirer la membrane flexible 3 au stator 2 ;

- les forces aérodynamiques (la portance et la traînée), qui s'opposent au mouvement de la membrane flexible 3 dans l'air, et qui tendent à écarter la membrane flexible 3 du stator 2 ;
- la force de rappel élastique de la membrane flexible 3.

En outre, la zone de montage de la membrane flexible 3 à l'extrémité distale 10 de chaque pale 1, la raideur en flexion de la membrane flexible 3, et l'espacement ($R_s$ - $R_p$) sont choisis de manière à :

- recouvrir une électrode E tout en évitant un recouvrement simultané de deux électrodes E adjacentes par la membrane flexible 3, comme illustré à la figure 2e,
- maximiser la différence entre $C_{max}$ et $C_{min}$, comme illustré aux figures 2a (cas théorique) et 2b (cas pratique), et éviter le cas illustré à la figure 2c où $C_{max}$ est trop faible,
- éviter des oscillations de la membrane flexible 3 à distance du matériau diélectrique 20 sur la première partie de trajectoire, comme illustré à la figure 2d pour le premier mode de réalisation.

En particulier, les oscillations de la membrane flexible 3 sont amplifiées avec la vitesse de rotation du rotor et une raideur trop faible de la membrane. Ainsi, les oscillations sont amplifiées avec la longueur de la membrane, une faible épaisseur de la membrane, et la souplesse de la membrane, conformément à la simulation d'une poutre encastrée-libre. Les oscillations de la membrane flexible 3 peuvent donc être réduites en diminuant sa longueur, en augmentant son épaisseur ou encore en utilisant un matériau plus rigide.

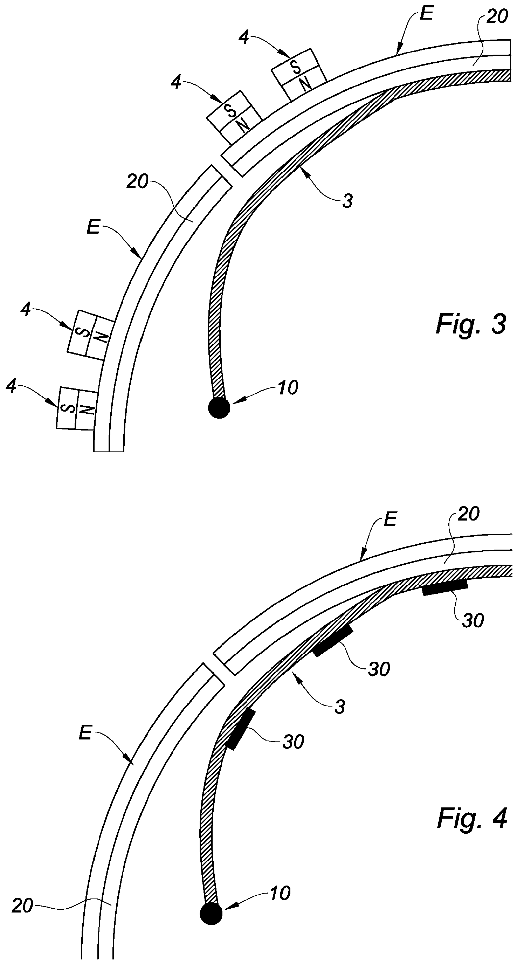

Selon un mode de réalisation illustré à la figure 3, la membrane flexible 3 est au moins partiellement ferromagnétique, et le stator 2 comporte des moyens d'aimantation agencés pour maintenir la membrane flexible 3 en contact glissant avec le matériau diélectrique 20 du stator 2 sur la première partie de la trajectoire pour le premier mode de réalisation. Pour ce faire, la contre-électrode de la membrane flexible 3 est avantageusement ferromagnétique. A titre d'exemple non limitatif, les moyens d'aimantation comportent des aimants permanents 4 dont les pôles magnétiques nord et sud sont respectivement notés N et S. Dans le second mode de réalisation, les moyens d'aimantation sont agencés pour maintenir le matériau diélectrique 20 de la contre-électrode en contact glissant avec chaque électrode E du stator 2.

Selon une variante de réalisation, le convertisseur électrostatique comporte des moyens de lestage agencés à la seconde surface de la membrane flexible 3 pour maintenir la membrane flexible 3 en contact glissant avec le matériau diélectrique 20 sur la première partie de la trajectoire pour le premier mode de réalisation. A titre d'exemple non limitatif, les moyens de lestage comportent une pluralité de masses 30 fixées à la membrane flexible 3. Dans le second mode de réalisation, les moyens de lestage sont agencés à la seconde surface de la membrane flexible 3 pour maintenir le matériau diélectrique 20 de la contre-électrode en contact glissant avec chaque électrode E du stator 2.

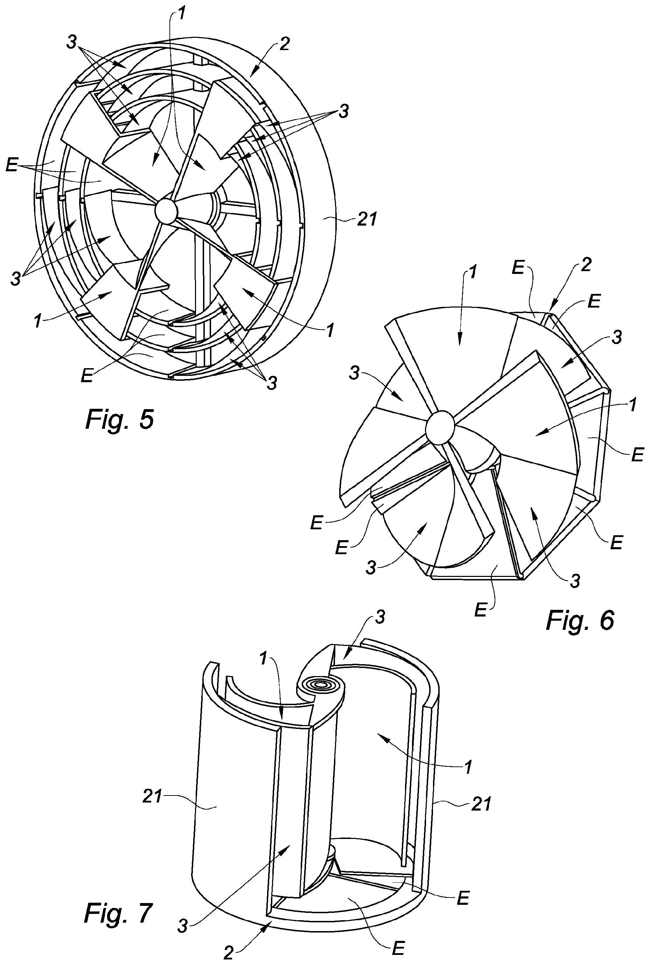

Le convertisseur électrostatique illustré à la figure 5 diffère du convertisseur électrostatique illustré à la figure 1 notamment en ce que chaque pale 1 comporte trois supports parallèles sur chacun desquels est montée une membrane flexible 3. Le carter 21 du stator 2 comporte trois éléments cylindriques parallèles, chacun en regard d'un support.

Le convertisseur électrostatique illustré à la figure 6 diffère du convertisseur électrostatique illustré à la figure 1 notamment en ce que le stator 2 présente la forme d'un disque.

Le convertisseur électrostatique illustré à la figure 7 diffère du convertisseur électrostatique illustré à la figure 1 notamment en ce que :

- l'axe de rotation est vertical,
- le carter 21 du stator 2 comporte deux parois en regard l'une de l'autre et reliées entre elles par au moins un disque.

**Revendications**

1. Convertisseur électrostatique comportant :

   - un rotor comprenant au moins une pale (1) destinée à recevoir un flux d'air ;
   - un stator (2) comprenant au moins une électrode (E) revêtue d'un matériau diélectrique (20) adapté pour être polarisé ;
   - une membrane flexible (3) montée sur la pale (1), et comprenant une contre-électrode ; la membrane flexible (3) décrivant une trajectoire lors d'un tour de rotor ; la membrane flexible (3) étant configurée de sorte que la contre-électrode vient en contact glissant avec le matériau diélectrique (20) sur une première partie de la trajectoire, et de sorte que la contre-électrode est située à distance du matériau diélectrique (20) sur une seconde partie de la trajectoire de manière à obtenir une capacité électrique variable adaptée pour induire un courant électrique.

2. Convertisseur électrostatique comportant :

   - un rotor comprenant au moins une pale (1) destinée à recevoir un flux d'air ;
   - un stator (2) comprenant au moins une électrode (E) ;
   - une membrane flexible (3) montée sur la pale (1), et comprenant une contre-électrode revêtue d'un matériau diélectrique (20) adapté pour être polarisé ; la membrane flexible (3) décrivant une trajectoire lors d'un tour de rotor ; la membrane flexible (3) étant configurée de sorte que le matériau diélectrique (20) vient en contact glissant avec l'électrode (E) sur une première partie de la trajectoire, et de sorte que le matériau diélectrique (20) est situé à distance de l'électrode (E) sur une seconde partie de la trajectoire de manière à obtenir une capacité électrique variable adaptée pour induire un courant électrique.

3. Convertisseur électrostatique selon la revendication 1 ou 2, **caractérisé en ce que** la membrane flexible (3) est au moins partiellement ferromagnétique, et **en ce que** le stator (2) comporte des moyens d'aimantation (4) agencés pour maintenir la membrane flexible (3) en contact glissant avec le stator (2) sur la première partie de la trajectoire.

4. Convertisseur électrostatique selon la revendication 1 ou 2, **caractérisé en ce qu'**il comporte des moyens de lestage (30) agencés pour maintenir la membrane flexible (3) en contact glissant avec le stator (2) sur la première partie de la trajectoire.

5. Convertisseur électrostatique selon l'une des revendications 1 à 4, **caractérisé en ce que** la membrane flexible (3) présente une raideur en flexion comprise entre 1 mN/m et 10 N/m.

6. Convertisseur électrostatique selon l'une des revendications 1 à 5, **caractérisé en ce que** l'électrode (E) présente une longueur, notée $L_0$, et **en ce que** la membrane flexible (3) présente une longueur, notée L, vérifiant $L_0 \leq L \leq 5\,L_0$.

7. Convertisseur électrostatique selon l'une des revendications 1 à 6, **caractérisé en ce que** le matériau diélectrique (20) est un électret.

8. Convertisseur électrostatique selon l'une des revendications 1 à 7, **caractérisé en ce que** la membrane flexible (3) et le stator (2) sont adaptés pour échanger des charges électrostatiques par effet triboélectrique sur la première partie de la trajectoire via le matériau diélectrique (20).

9. Convertisseur électrostatique selon l'une des revendications 1 à 8, **caractérisé en ce que** le rotor présente un axe de rotation, **en ce que** la pale (1) présente une extrémité distale (10) relativement à l'axe de rotation, et **en ce que** la membrane flexible (3) est montée à l'extrémité distale (10) de la pale (1).

10. Convertisseur électrostatique selon l'une des revendications 1 à 9, **caractérisé en ce que** le stator (2) comporte un ensemble d'électrodes (E) réparti, de préférence uniformément, autour de la trajectoire.

11. Convertisseur selon la revendication 10, **caractérisé en ce que** l'ensemble d'électrodes (E) comporte $N_e$ électrodes (E) successives réparties autour de la trajectoire, $N_e$ étant un entier naturel supérieur ou égal à 3 ; et **en ce que** la contre-électrode de la membrane flexible (3) forme un réseau de motifs (31) agencé de sorte que, sur la première partie de la trajectoire, deux motifs (31) consécutifs sont :

- en contact avec une k-ième électrode (E) et une (k+2)-ième électrode (E), et
- à distance d'une (k+1)-ième électrode (E), avec $k \in [[1, Ne]]$.

12. Convertisseur électrostatique selon l'une des revendications 1 à 11, **caractérisé en ce que** le rotor comporte $N_p$ pales, $N_p$ étant un entier supérieur ou égal à 1, la membrane flexible (3) étant montée sur chaque pale (1), et **en ce que** le stator (2) comporte un ensemble de $N_e$ électrodes, $N_e$ étant un entier vérifiant $N_e = 2Np$.

13. Convertisseur électrostatique selon l'une des revendications 1 à 12, **caractérisé en ce que** la membrane flexible (3) comporte un film d'un matériau présentant un module d'Young compris entre 100 MPa et 5 GPa, de préférence compris entre 1 GPa et 5 GPa.

14. Convertisseur électrostatique selon la revendication 13, **caractérisé en ce que** le film présente une épaisseur comprise entre 1 $\mu$m et 1 mm, de préférence comprise entre 1 $\mu$m et 125 $\mu$m, plus préférentiellement comprise entre 1 $\mu$m et 50 $\mu$m.

15. Convertisseur électrostatique selon l'une des revendications 1 à 14, **caractérisé en ce que** le matériau diélectrique (20) présente une épaisseur comprise entre 1 $\mu$m et 125 $\mu$m, de préférence comprise entre 25 $\mu$m et 100 $\mu$m.

16. Convertisseur électrostatique selon l'une des revendications 1 à 15, **caractérisé en ce que** le stator (2) comporte un circuit électrique dans lequel circule le courant induit, le circuit électrique étant connecté à ladite au moins une électrode (E).

Fig. 1

Fig. 2a

Fig. 2b

Fig. 2c

Fig. 2d

Fig. 2e

Fig. 3

Fig. 4

Fig. 5

Fig. 6

Fig. 7

Fig. 8

Europäisches
Patentamt

European
Patent Office

Office européen
des brevets

**RAPPORT DE RECHERCHE EUROPEENNE**

Numéro de la demande

EP 16 20 7637

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | CN 105 162 353 A (BEIJING INST TECHNOLOGY) 16 décembre 2015 (2015-12-16) * abrégé * * figures 1-3 * ----- | 1,2,5, 7-10,16 | INV. F03D9/00 H02N1/00 |
| Y | US 7 612 541 B1 (BRAINARD JOHN P [US] ET AL) 3 novembre 2009 (2009-11-03) * colonne 2, lignes 29-36 * * colonne 4, lignes 40-42 * * colonne 2, ligne 64 - colonne 3, ligne 5 * * figures 1,2,5,6 * ----- | 1,2,5, 7-10,16 | |
| A | US 2014/252914 A1 (POST RICHARD F [US]) 11 septembre 2014 (2014-09-11) * alinéas [0007], [0021], [0034], [0038] * * figures 1A,2A,3A * ----- | 1-3,8,16 | |
| A | US 2014/246951 A1 (WANG ZHONG LIN [US] ET AL) 4 septembre 2014 (2014-09-04) * alinéas [0005], [0013], [0129] * * figures 9,10A-10C * ----- | 1,2,8, 10,16 | DOMAINES TECHNIQUES RECHERCHES (IPC) F03D H02N |
| A | DE 20 2012 009612 U1 (WIEDEMANN ANDRE [DE]) 18 décembre 2012 (2012-12-18) * alinéa [0025] * * figures 1,1.2 * ----- | 1,2,7-9 | |

Le présent rapport a été établi pour toutes les revendications

| Lieu de la recherche | Date d'achèvement de la recherche | Examinateur |
|---|---|---|
| La Haye | 19 mai 2017 | Pasquet, Pierre |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 16 20 7637

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

19-05-2017

| Document brevet cité au rapport de recherche | Date de publication | Membre(s) de la famille de brevet(s) | Date de publication |
|---|---|---|---|
| CN 105162353 A | 16-12-2015 | AUCUN | |
| US 7612541 B1 | 03-11-2009 | AUCUN | |
| US 2014252914 A1 | 11-09-2014 | AUCUN | |
| US 2014246951 A1 | 04-09-2014 | AUCUN | |
| DE 202012009612 U1 | 18-12-2012 | AUCUN | |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 202012009612